# DEMANDE DE BREVET EUROPEEN

(11) **EP 4 197 901 A1**
(43) Date de publication de la demande: **21.06.2023**
(21) Numéro de dépôt: 22214405.7
(22) Date de dépôt: 18.12.2022
(51) Int. Cl.: B64C 1/14

(54) **MODULE D'ENCADREMENT DE PORTE PASSAGER CONFIGURÉ POUR ÊTRE RELIÉ À UNE PEAU D'UN FUSELAGE D' AÉRONEF**

(30) Priorité: 20.12.2021 FR 2113942
(71) Demandeur: Airbus Atlantic, 17300 Rochefort (FR)
(72) Inventeur: ANDRIEU, Gilles, 31140 MONTBERON (FR); CHIAPPINI, Attilio, 31770 COLOMIERS (FR); VINCENT, Olivier, 31700 CORNEBARRIEU (FR); JEANJEAN, Florent, 31700 MONDONVILLE (FR)
(74) Mandataire: Argyma

(57) **Abrégé**

Un module d'encadrement (M1) pour un encadrement (5) de porte passager configuré pour être relié à une peau (2) d'un fuselage (1) d'aéronef (A), le module d'encadrement (M1) comportant un corps principal monobloc (6) comportant au moins une partie de coin (6d, 6e) incurvée d'un angle compris entre 70° et 110° de manière à assurer la transition des efforts entre une partie supérieure et une partie latérale de l'encadrement (5), le corps principal monobloc (6) comportant une section ouverte définissant une paroi intérieure (P1), une paroi extérieure (P2) et une paroi de liaison (P3) reliant la paroi intérieure (P1) à la paroi extérieure (P2), la paroi intérieure (P1) comportant une languette intérieure (61) et la paroi extérieure (P2) comportant une languette extérieure (62) configurées pour être fixées à la peau (2) de manière à former un caisson avec une cavité intérieure.

## Description

### DOMAINE TECHNIQUE

La présente invention concerne le domaine de la fabrication de la structure d'un aéronef, en particulier, un encadrement d'une porte passager d'un aéronef.

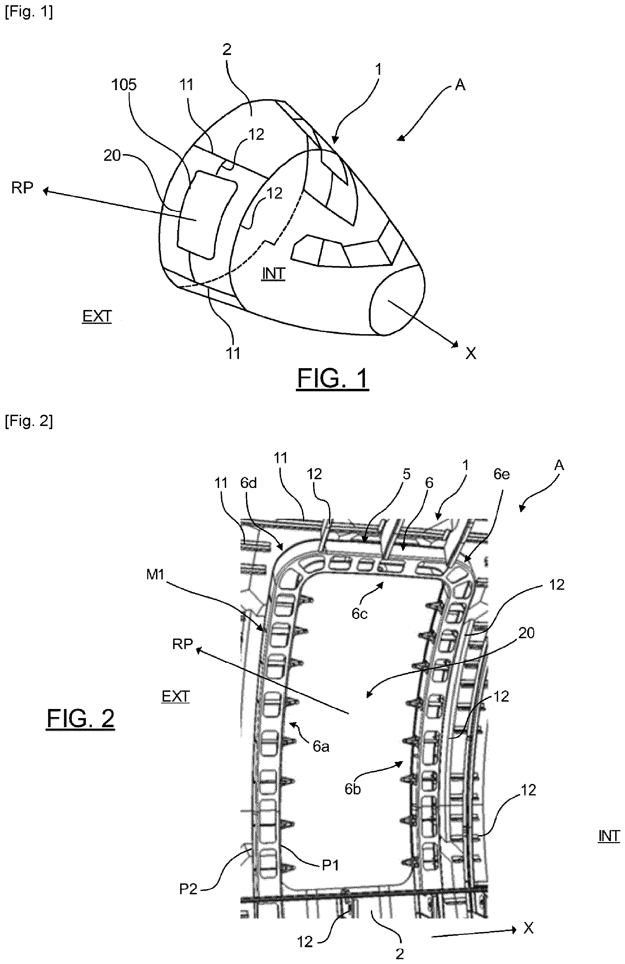

De manière connue, en référence à la figure 1, un aéronef A comporte un fuselage 1 s'étendant longitudinalement selon un axe X orienté d'arrière en avant. Le fuselage 1 comporte une peau 2 définissant la surface extérieure de l'aéronef A qui peut être du type simple ou double courbure. Pour permettre l'entrée et la sortie des passagers, la peau 2 comporte une ouverture 20, appelée « ouverture extérieure ». L'ouverture extérieure 20 est configurée pour être obturée par une porte passager (non représentée) séparant l'environnement extérieur de l'aéronef EXT de son environnement intérieur INT. L'ouverture extérieure 20 possède un axe RP qui est radial par rapport à l'axe longitudinal X qui est orienté de l'intérieur INT vers l'extérieur EXT.

Le fuselage 1 comporte en outre un assemblage de raidisseurs longitudinaux 11, appelés « lisses », et de raidisseurs transversaux 12, appelés « cadres », qui sont fixés à la peau 2 ainsi qu'un encadrement de porte 105, désigné par la suite « encadrement », pour rigidifier la circonférence de l'ouverture extérieure 20 formée dans la peau 2 et reprendre les efforts. En pratique, une porte passager induit au niveau de l'encadrement 105 des efforts principalement radiaux orientés vers l'extérieur de l'aéronef A qui sont repris par des butées prévues au niveau de l'encadrement 105.

De manière connue, un encadrement 105 comprend un cadre de bordure comportant un raidisseur longitudinal supérieur appelé linteau, un raidisseur longitudinal inférieur appelé seuil, des raidisseurs verticaux de part et d'autre de l'ouverture extérieure 20 et reliés aux raidisseurs longitudinaux. De plus, l'encadrement 105 comprend un cadre secondaire constitué d'au moins deux raidisseurs verticaux disposés de part et d'autre de l'ouverture à une certaine distance et deux raidisseurs longitudinaux supérieur et inférieur distants du linteau et du seuil et reliés aux raidisseurs verticaux. L'encadrement 105 comprend également des nervures ou renforts pour relier le cadre de bordure et le cadre secondaire. Ces nervures, dites intercostales, permettent de former, de part et d'autre de l'ouverture extérieure 20, une structure en forme d'échelle permettant la diffusion des flux d'effort dans la peau. Un tel encadrement en forme d'échelle est connu par la demande de brevet WO03/104080A1.

En pratique, les nombreuses pièces de l'encadrement sont montées de manière individuelle et successive, ce qui impose un temps de montage important et rend complexe toute augmentation de cadence de fabrication. De plus, cela pénalise la masse et le coût d'un tel encadrement.

Il a été proposé par la demande de brevet WO2011/002081 de remplacer les raidisseurs verticaux du cadre de bordure et du cadre secondaire par une structure en caisson comportant trois parois en matériau composite reliées ensemble. En pratique, la liaison d'une structure en caisson avec les raidisseurs longitudinaux (seuil, linteau) est complexe à mettre en œuvre étant donné qu'il est nécessaire de réaliser une liaison précise à chaque extrémité des raidisseurs longitudinaux avec une peau ayant une simple ou double courbure. Une telle liaison augmente le temps d'assemblage. En outre, la reprise des efforts entre les structures verticales et longitudinales ne sont pas optimales étant donné qu'il est nécessaire de prévoir des renforts ou des surépaisseurs au niveau des interfaces (coins de porte), ce qui pénalise la masse. En outre, le drainage des efforts au niveaux des coins de porte n'est pas optimal, ce qui génère des problématiques de fatigue thermique et nécessite d'utiliser des matériaux onéreux. On connait par ailleurs dans l'art antérieur les demandes de brevet EP3235722A1, EP3483057A1, DE102009057012A1 et DE102009057010A1.

L'invention vise ainsi à éliminer au moins certains de ces inconvénients en proposant un encadrement de porte passager nécessitant peu d'assemblage.

### PRESENTATION DE L'INVENTION

L'invention concerne un module d'encadrement pour un encadrement de porte passager configuré pour être relié à une peau d'un fuselage d'aéronef, la peau comportant une ouverture extérieure configurée pour être fermée par une porte passager, l'ouverture extérieure ayant une circonférence comportant une partie supérieure, deux parties latérales opposées et deux parties de coin reliant respectivement la partie supérieure aux deux parties latérales, le module d'encadrement comportant :
- un corps principal monobloc comportant au moins une partie de coin configurée pour rigidifier une partie de coin de la circonférence de l'ouverture extérieure, la partie de coin étant incurvée d'un angle compris entre 70° et 110° de manière à assurer la transition des efforts entre une partie supérieure et une partie latérale de l'encadrement,
- le corps principal monobloc comportant une section ouverte définissant une paroi intérieure, une paroi extérieure et une paroi de liaison reliant la paroi intérieure à la paroi extérieure, la paroi intérieure comportant une languette intérieure et la paroi extérieure comportant une languette extérieure configurées pour être fixées à la peau de manière à former un caisson avec une cavité intérieure.

Un corps principal monobloc incurvé permet de drainer de manière optimale les efforts reçus par une partie supérieure et/ou une partie latérale de l'encadrement. Outre le fait que le nombre de pièces soit réduit, cela permet d'éliminer toutes les opérations de liaison complexes entre les raidisseurs latéraux et longitudinaux d'un encadrement comme dans l'art antérieur. Une forme globale en caisson permet en outre de drainer tous les efforts de torsion et de les répartir de manière optimale afin de les absorber dans le fuselage. Les épaisseurs sont ainsi optimisées pour réduire la masse.

De manière avantageuse, un tel module d'encadrement peut être fabriqué de manière déportée par rapport au lieu d'assemblage, ce qui permet d'accélérer les cadences d'assemblage d'un aéronef. En réduisant le nombre d'interfaces, le nombre de pièces est avantageusement réduit ainsi que la masse. En outre, cela permet d'éviter la multiplication de postes d'assemblage volumineux.

Un corps principal monobloc incurvée permet d'éviter en outre d'ajouter des surépaisseurs ou d'utiliser des matériaux onéreux pour améliorer la reprise des efforts. En améliorant la transmission des efforts, un effort reçu sur une partie supérieure de l'encadrement peut être transmis de manière optimale à une partie latérale de l'encadrement (et réciproquement).

De préférence, le corps principal monobloc comporte au moins une partie latérale configurée pour rigidifier une partie latérale de la circonférence de l'ouverture extérieure.

Cela permet de manière optimale de drainer les efforts entre une partie de coin et une partie latérale.

De préférence encore, le module d'encadrement comprend une pluralité d'organes de butée configurée pour entrer en contact avec la porte passager, les organes de butée étant fixés à la partie latérale du corps principal monobloc.

Les efforts de butée sont ainsi drainés par le corps principal monobloc et répartis de manière optimale.

De manière préférée, les organes de butée sont fixés à la paroi intérieure de la partie latérale dudit corps principal. De manière préférée, les organes de butée sont fixés à la paroi intérieure des parties latérales dudit corps principal de manière à s'étendre en saillie dans l'ouverture extérieure pour coopérer avec la porte passager en position fermée.

Selon un aspect préféré, le module d'encadrement comprend une pluralité d'organes de renfort logés dans la cavité intérieure du corps principal monobloc et reliés audit corps principal monobloc, un organe de renfort étant positionné en regard de chaque organe de butée pour reprendre ses efforts. Un tel organe de renfort permet de dissiper des efforts de butée tout en étant intégré dans la cavité intérieure.

De manière préférée, chaque organe de renfort est fixé à l'organe de butée avec lequel il est positionné en regard afin de permettre une transmission des efforts de butée.

De préférence, chaque organe de renfort possède une forme de ceinture qui est reliée à la paroi intérieure et à la paroi extérieure. Une double liaison permet à l'organe de renfort de dissiper les efforts de manière répartie dans le corps principal monobloc, ce qui permet d'alléger sa structure. L'organe de renfort 9 pourrait également présenter une forme de « I » pour relier la paroi intérieure à la paroi extérieure.

Selon un aspect de l'invention, chaque organe de renfort comporte des languettes fixées à la paroi de liaison du corps principal monobloc. Une liaison à chaque paroi du corps principal monobloc permet à l'organe de renfort de dissiper les efforts de manière optimale dans le corps principal monobloc, ce qui permet d'alléger sa structure.

De préférence, le corps principal monobloc comporte au moins une partie supérieure configurée pour rigidifier une partie supérieure de la circonférence de l'ouverture extérieure.

Cela permet de manière optimale de drainer les efforts entre une partie de coin et une partie supérieure.

De préférence, le module d'encadrement comporte des organes de raccord montés dans la cavité intérieure de la partie supérieure du corps principal monobloc configurés pour être fixés respectivement à des raidisseurs transversaux reliés à la peau.

L'utilisation de tels organes de raccord permet de drainer les efforts de butée également dans les raidisseurs supérieurs en tirant avantage de la forme en caisson du linteau.

De manière préférée, le corps principal monobloc comporte au moins deux parties de coin configurées pour rigidifier deux parties de coin de la circonférence de l'ouverture extérieure, chaque partie de coin étant incurvée d'un angle compris entre 70° et 110° de manière à assurer la transition des efforts entre une partie supérieure et une partie latérale de l'encadrement.

Un corps principal monobloc ayant une forme de U inversé permet de drainer de manière optimale les efforts reçus vers la peau, en particulier, vers les raidisseurs transversaux. Outre le fait que le nombre de pièces soit réduit, cela permet d'éliminer toutes les opérations de liaison entre les raidisseurs latéraux et longitudinaux d'un encadrement comme dans l'art antérieur.

De préférence, le module d'encadrement comporte également une partie inférieure formant le seuil qui est configurée pour rigidifier une partie inférieure de la circonférence de l'ouverture extérieure. De préférence, le corps principal monobloc possède une forme périphérique qui reprend les efforts appliqués à la périphérie de l'ouverture extérieure. Le nombre de pièces nécessaires pour former l'encadrement est encore réduit.

De manière préférée, l'extrémité inférieure de la partie latérale du corps principal monobloc se présente sous la forme d'une fourche ayant au moins deux dents afin de permettre une liaison pratique avec les raidisseurs transversaux reliés à la peau.

De préférence, les dents d'une fourche sont configurées pour être fixées respectivement à deux raidisseurs transversaux reliés à la peau. Autrement dit, les efforts appliqués à chaque partie latérale du corps principal monobloc sont dissipés dans deux raidisseurs transversaux reliés à la peau, ce qui permet un drainage efficace et permet d'alléger la structure de l'encadrement.

L'invention concerne un encadrement de porte passager configuré pour être relié à une peau d'un fuselage d'aéronef, la peau comportant une ouverture extérieure configurée pour être fermée par une porte passager, l'ouverture extérieure ayant une circonférence comportant une partie supérieure, deux parties latérales opposées et deux parties de coin reliant respectivement la partie supérieure aux deux parties latérales, l'encadrement comportant au moins un module d'encadrement tel que présenté précédemment.

De préférence, l'encadrement comporte au moins un module auxiliaire comportant au moins une partie latérale configurée pour rigidifier une partie latérale de la circonférence de l'ouverture extérieure, le module auxiliaire étant relié à au moins un module d'encadrement.

De manière préférée, le module auxiliaire est monobloc.

Selon un aspect de l'invention, l'encadrement comprend un raidisseur longitudinal inférieur configuré pour rigidifier une partie inférieure de la circonférence de l'ouverture extérieure, désigné raidisseur de seuil, qui est monté de manière rapportée. Du fait de la structure monobloc du corps principal monobloc, l'espace de montage du raidisseur longitudinal inférieur est parfaitement défini et ce dernier peut être monté de manière pratique. Un montage rapporté offre de la flexibilité lors du montage.

L'invention concerne également un ensemble comprenant une peau d'un fuselage d'aéronef, la peau comportant une ouverture extérieure configurée pour être fermée par une porte passager, et un module d'encadrement de porte passager, tel que présenté précédemment, dont la languette intérieure et la languette extérieure sont reliées à la peau de manière à former un caisson avec une cavité intérieure.

L'invention concerne également un procédé de montage d'un module d'encadrement, tel que présenté précédemment, sur une peau d'un fuselage d'aéronef, la peau comportant une ouverture extérieure configurée pour être fermée par une porte passager et des raidisseurs transversaux, le procédé comportant des étapes consistant à :
- Relier la languette intérieure et la languette extérieure à la peau puis
- Relier le module d'encadrement aux raidisseurs transversaux

Un tel montage permet de prémonter l'encadrement afin de définir de manière globale sa position. L'encadrement peut ensuite être monté de manière précise à la peau pour permettre un assemblage précis garant d'une reprise des efforts qui est optimale.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un fuselage d'aéronef selon l'art antérieur.
La figure 2 est une représentation schématique d'un encadrement de porte passager comportant un module d'encadrement monobloc selon une forme de réalisation de l'invention, monté sur le fuselage d'un aéronef.
La figure 3 et la figure 4 sont d'autres représentations schématiques de l'encadrement de porte passager de la figure 2.
La figure 5 est une représentation schématique d'un encadrement de porte avec la porte passager en position ouverte.
La figure 6 est une représentation schématique d'un encadrement de porte avec la porte passager en position fermée.
La figure 7 est une représentation schématique d'une section d'un corps principal d'un module d'encadrement monobloc de porte.
La figure 8 et la figure 9 sont des représentations schématiques d'autres formes de réalisation d'un module d'encadrement monobloc de porte
La figure 10 est une représentation schématique vue depuis l'intérieur d'un organe de butée et d'un organe de renfort montés sur le corps principal.
La figure 11 est une représentation schématique d'un organe de butée et d'un organe de renfort sans le corps principal.
La figure 12 est une représentation schématique vue depuis l'extérieur d'un organe de butée et d'un organe de renfort montés sur le corps principal.
La figure 13 est une représentation schématique d'un organe de raccord relié à un raidisseur transversal.
La figure 14 est une représentation schématique d'un encadrement de porte en éclaté.
La figure 15 est une représentation d'un encadrement de porte en une partie.
La figure 16 est une représentation d'un encadrement de porte en deux parties.
La figure 17 est une représentation d'un encadrement de porte en trois parties.
La figure 18 est une représentation d'un encadrement de porte en quatre parties.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

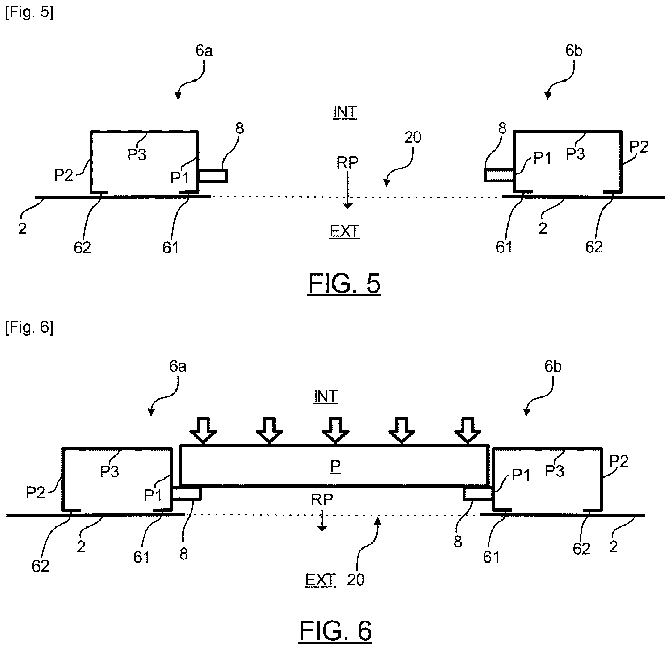

En référence à la figure 2 représentant une pointe avant d'un aéronef A, l'aéronef A s'étend longitudinalement selon un axe X et comporte un fuselage 1 comprenant une peau 2 qui comprend une ouverture extérieure 20 permettant à un passager de l'aéronef A de se déplacer entre un environnement intérieur INT et un environnement extérieur EXT de l'aéronef A. L'ouverture extérieure 20 est configurée pour être fermée par une porte passager P (Figure 6) et comporte une circonférence. L'ouverture extérieure 20 possède un axe RP qui est radial par rapport à l'axe longitudinal X et qui est orienté de l'intérieur INT vers l'extérieur EXT.

Afin de rigidifier la peau 2, qui peut comporter une simple courbure ou une double courbure, le fuselage 1 comporte des raidisseurs longitudinaux 11 s'étendant selon l'axe X, appelés « lisses », et de raidisseurs transversaux 12 s'étendant transversalement à l'axe X, appelés « cadres », qui sont fixés à la peau 2. L'ouverture extérieure 20 forme une discontinuité dans les raidisseurs transversaux 12. De préférence, les raidisseurs longitudinaux 11 et transversaux 12 sont réalisés en matériau composite mais ils pourraient être réalisés en métal.

Afin de rigidifier l'ouverture extérieure 20 et permettre de reprendre les efforts mécaniques induits par la porte passager P lors de la pressurisation de l'environnement intérieur INT, le fuselage 1 comporte en outre un encadrement de porte 5, désigné par la suite « encadrement 5 ».

Selon l'invention, en référence aux figures 2 à 4, l'encadrement 5 comporte un module d'encadrement M1 qui comporte un corps principal monobloc 6 définissant deux parties latérales 6a, 6b configurées pour rigidifier deux parties latérales opposées de la circonférence de l'ouverture extérieure 20 et au moins une partie supérieure 6c configurée pour rigidifier une partie supérieure de la circonférence de l'ouverture extérieure 20.

Le corps principal monobloc 6 comporte une section ouverte définissant une base, deux branches et une cavité ouverte tournée vers la peau 2, les branches comportant des extrémités libres de fixation configurées pour être fixées à la peau de manière à former un caisson avec une cavité intérieure comme cela sera présenté en détails à la figure 5.

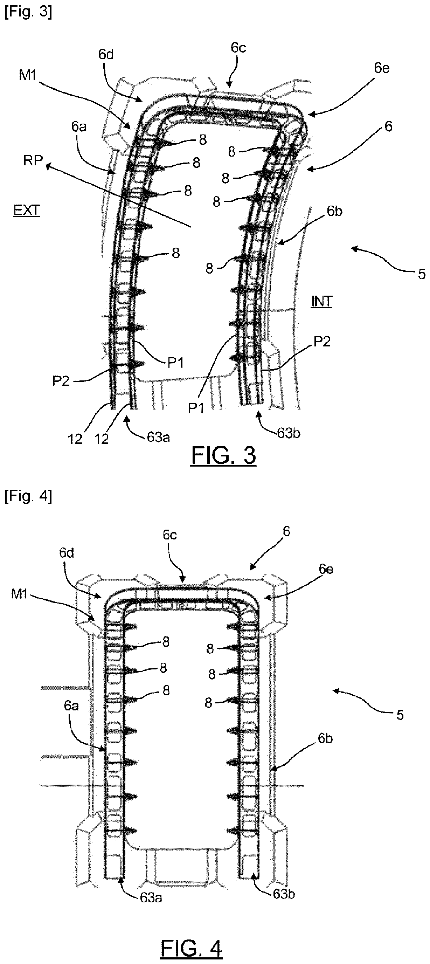

Dans cette forme de réalisation, en référence aux figures 3 à 4, le module d'encadrement comporte un corps principal monobloc 6 se présente sous la forme d'un U inversé pour encadrer les parties latérales, les parties de coin et la partie supérieure de l'ouverture extérieure 20 afin de la rigidifier. Etant donné que le corps principal monobloc 6 possède une structure monobloc, il n'est plus nécessaire de réaliser des opérations dans l'aéronef A pour relier ensemble les éléments verticaux et les éléments longitudinaux de l'encadrement 5, ce qui assure un gain de temps et permet d'améliorer de manière importante la reprise des efforts entre les parties latérales et la partie supérieure.

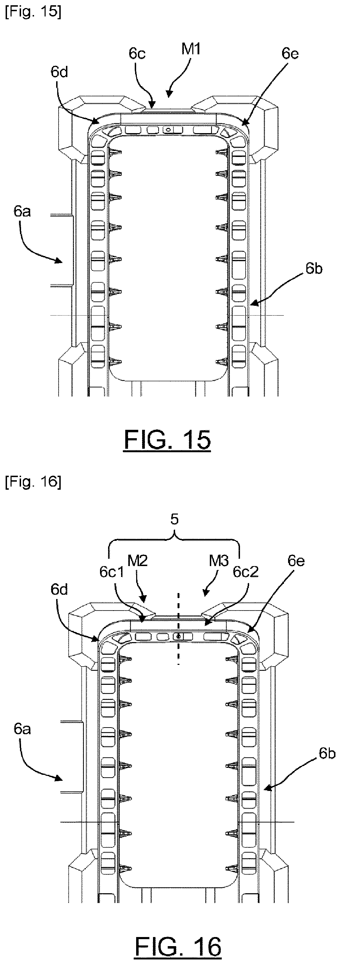

Dans cette forme de réalisation, l'encadrement 5 et le module d'encadrement M1 se confondent. D'autres formes de réalisation de l'encadrement 5 seront présentées aux figures 16 à 18.

Un encadrement 5 avec un linteau en forme de caisson est avantageux étant donné qu'il permet d'assurer une continuité et une homogénéité lors de la transmission des efforts notamment engendrés pas la porte passager P. Cela permet de limiter de manière importante le nombre de pièces devant être installées in situ dans l'aéronef A. Grâce à l'invention, le corps principal monobloc 6 de l'encadrement 5 peut être fabriqué dans un lieu déporté et assemblé de manière rapide sur la peau 2 de l'aéronef A. Un tel encadrement 5 permet d'améliorer les cadences de fabrication d'un aéronef A de manière importante.

Les deux parties de coin 6d, 6e permettent d'assurer une transition optimale des efforts entre les parties latérales 6a, 6b et la partie supérieure 6c du fait de leur caractère monobloc. De préférence, chaque partie latérale 6a, 6b du corps principal 6 est configurée pour rigidifier entièrement un bord latéral de la circonférence de l'ouverture extérieure 20, autrement dit, sur toute sa hauteur. De préférence encore, la partie supérieure 6c s'étend sur toute la longueur du bord supérieur de la circonférence de l'ouverture extérieure 20.

De manière préférée, le corps principal monobloc 6 est réalisé en matériau composite, en particulier à partir de fibres de renfort noyées dans une matrice thermoplastique. Le corps principal monobloc 6 possède ainsi une structure légère et robuste.

Dans cet exemple, en référence à la figure 6, le corps principal monobloc 6 comporte trois parois : une paroi intérieure P1, une paroi extérieure P2 et une paroi de liaison P3 reliant la paroi intérieure P1 à la paroi extérieure P2. La paroi intérieure P1 est située à proximité de l'ouverture extérieure 20 et est, de préférence, orthogonale à la peau 2 ou inclinée par rapport à cette dernière. La paroi extérieure P2 est radialement extérieure à la paroi intérieure P1, à distance de l'ouverture extérieure 20. La paroi extérieure P2 est ici orthogonale à la peau 2 mais pourrait également être inclinée. La paroi de liaison P3 est de préférence parallèle à la peau 2. Le corps principal monobloc 6 possède ainsi une section en U ou en oméga.

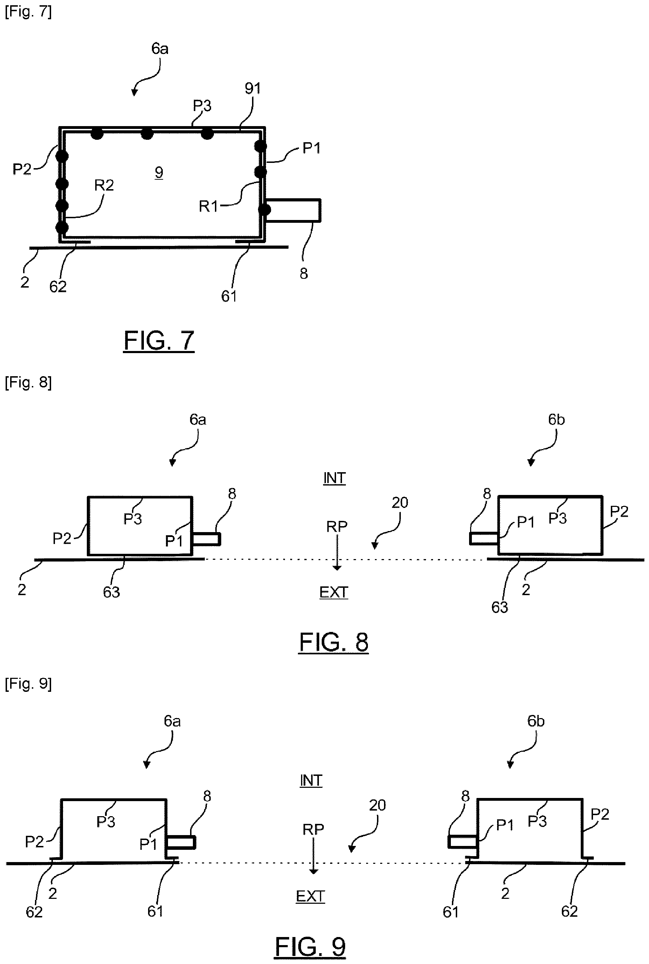

De manière préférée, en référence à la figure 5, la paroi intérieure P1 comprend une languette intérieure 61 destinée à être en appui plan contre la peau 2 et fixée à cette dernière, par exemple, par rivetage/soudure/co-consolidation ou autre. Par consolidation, on entend une application d'une pression sur des plis de matière composite à une température de plus de 400°C. Par co-consolidation, on entend un assemblage de deux pièces réalisées par consolidation à l'aide d'une presse ou d'un outillage local. De manière analogue, la paroi extérieure P2 comprend une languette extérieure 62 destinée à être en appui plan contre la peau 2 et fixée à cette dernière. En référence à la figure 5, la languette intérieure 61 et la languette extérieure 62 s'étendent en saillie l'une vers l'autre, c'est-à-dire, sous la paroi de liaison P3. Selon une variante, la languette intérieure 61 et la languette extérieure 62 s'étendent en saillie l'une vers l'autre et se rejoignent pour former une languette unique 63 comme illustré à la figure 8. Il va de soi que la languette intérieure 61 et la languette extérieure 62 pourraient également s'étendre en saillie à l'opposée l'une de l'autre comme illustré à la figure 9. Dans cette variante, la languette intérieure 61 et la languette extérieure 62 ne sont pas situées en regard de la paroi de liaison P3.

En référence aux figures 3 et 4, le module d'encadrement M1 comprend des organes de butée 8 contre lesquelles peut prendre appui la porte passager P pour assurer notamment la reprise des efforts orientés vers l'extérieur EXT comme illustré sur la figure 6. Ces organes de butée 8 sont de préférence positionnés au niveau des parties latérales 6a, 6b dudit corps principal monobloc 6.

Dans cet exemple, en référence aux figures 5 à 7, les organes de butée 8 sont fixés à la paroi intérieure P1 des parties latérales 6a, 6b dudit corps principal 6 et s'étendent en saillie vers l'ouverture extérieure 20. Du fait de sa structure monobloc, les efforts transitent de manière répartie dans le corps principal monobloc 6 qui peut ainsi posséder une structure légère. Il n'est pas nécessaire de renforcer des zones de jonction comme dans l'art antérieur.

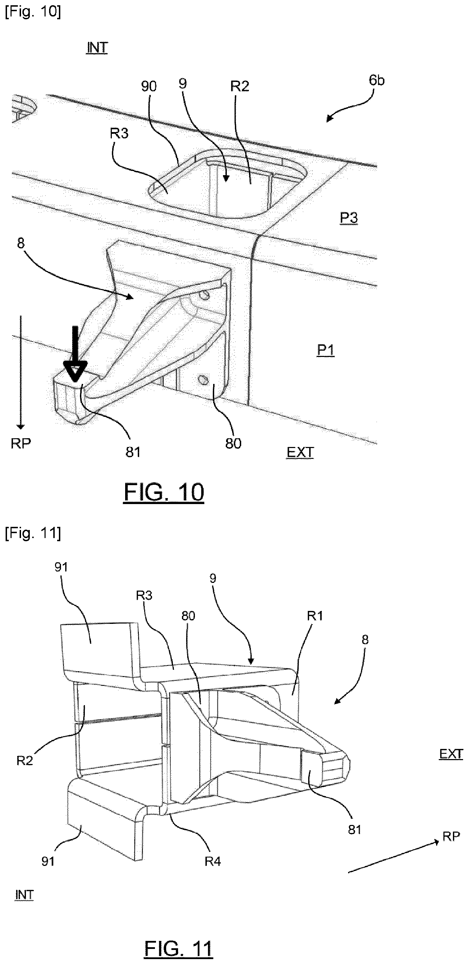

Comme illustré aux figures 10 et 11, un organe de butée 8 comporte une base 80 fixée à la paroi intérieure P1 et s'étend en saillie vers l'intérieur de l'ouverture extérieure 20 afin de pouvoir coopérer avec une porte passager P en position fermée. L'organe de butée 8 comporte également une surface de contact 81 destinée à venir au contact avec la porte passager P en position fermée. La surface de contact 81 est sensiblement orthogonale à l'axe de porte RP.

Afin de permettre une transmission optimale des efforts au corps principal monobloc 6, toujours en références aux figures 10 et 11, l'encadrement 5 comprend une pluralité d'organes de renfort 9 logés dans la cavité du corps principal monobloc 6. De manière préférée, un organe de renfort 9 est positionné en regard de chaque organe de butée 8 pour reprendre ses efforts. Autrement dit, chaque organe de butée 8 est associé à un organe de renfort 9. Il va néanmoins de soi que le nombre d'organes de renfort 9 pourrait être plus élevé pour augmenter localement la résistance mécanique.

Dans cet exemple, l'organe de butée 8 et l'organe de renfort 9 sont reliés ensemble, en particulier, via la paroi intérieure P1 du corps principal 6. Ainsi, les efforts de butée sont transmis de manière optimale de l'organe de butée 8 à l'organe de renfort 9.

Dans cet exemple, l'organe de renfort 9 possède une forme de ceinture qui est reliée à la paroi intérieure P1 et à la paroi extérieure P2 afin de permettre une transmission des efforts reçus par l'organe de butée 8 dans plusieurs parois P1, P2 du corps principal monobloc 6. De manière préférée, en référence à la figure 11, l'organe de renfort 9 comporte quatre parois : une paroi avant R1 en contact avec la paroi intérieure P1, une paroi arrière R2 en contact avec la paroi extérieure P2 et deux parois latérales R3, R4. Dans cet exemple, les parois latérales R3, R4 comportent des languettes 91 destinées à être fixées à la paroi de liaison P3 du corps principal 6 afin de permettre une transmission des efforts reçus par l'organe de butée 8 dans toutes les parois P1, P2, P3 du corps principal monobloc 6. La répartition des efforts est ainsi optimale. L'organe de renfort 9 pourrait également présenter une forme de « I ».

De préférence, les languettes 91 s'étendent entre la paroi intérieure P1 et la paroi extérieure P2 du corps principal 6. La figure 7 représente de manière schématique le montage d'un organe de renfort 9 et d'un organe de butée 8 dans une partie latérale 6a du corps principal monobloc 6. Sur cette figure, les points noirs représentent des liaisons qui peuvent être de différentes natures, par exemple, par rivetage/soudure/co-consolidation ou autre.

Dans une configuration, la paroi de liaison P3 du corps principal monobloc 6 est ouverte au droit des organes de renfort 9 afin de limiter la masse du corps principal monobloc 6 dans une zone renforcée et permettre la liaison du corps principal monobloc 6 avec l'organe de renfort 9. Cela permet en outre de faciliter l'accès en cas de réparation ou maintenance. Elle peut être positionnée également sur les parois P1 et P2.

Dans une forme de réalisation non représentée, l'encadrement 5 comporte en outre un raidisseur longitudinal inférieur, désigné raidisseur de seuil, qui est monté de manière rapportée au corps principal monobloc 6 au niveau du bord inférieur de la circonférence de l'ouverture extérieure 20. De manière avantageuse, du fait de l'aspect monobloc du corps principal 6, l'écartement entre les partie latérale 6a, 6b du corps principal 6 est parfaitement définie et le montage d'un raidisseur de seuil est pratique pour les opérateurs.

Selon une variante de l'invention, le corps principal monobloc 6 comporte également une partie inférieure formant le seuil. Autrement dit, le corps principal monobloc 6 possède une forme périphérique pour rigidifier entièrement la circonférence de l'ouverture extérieure 20.

Dans cet exemple, en référence aux figures 3 et 4, chaque extrémité inférieure d'une partie latérale 6a, 6b du corps principal monobloc 6 se présenté sous la forme d'une fourche 63a, 63b, en particulier, comportant deux dents. En pratique, une fente est formée à l'extrémité inférieure de chaque partie latérale 6a, 6b de manière à ce que chaque dent puisse être reliée de manière pratique avec un raidisseur transversal 12 situé sous l'encadrement 5 comme illustré à la figure 2. En particulier, la paroi intérieure P1 d'une fourche 63a, 63b est reliée à un premier raidisseur transversal 12 tandis que la paroi extérieure P2 de ladite fourche 63a, 63b est reliée à un deuxième raidisseur transversal 12. La transmission des efforts entre l'encadrement 5 et la peau 2 et ses raidisseurs 12 est ainsi améliorée.

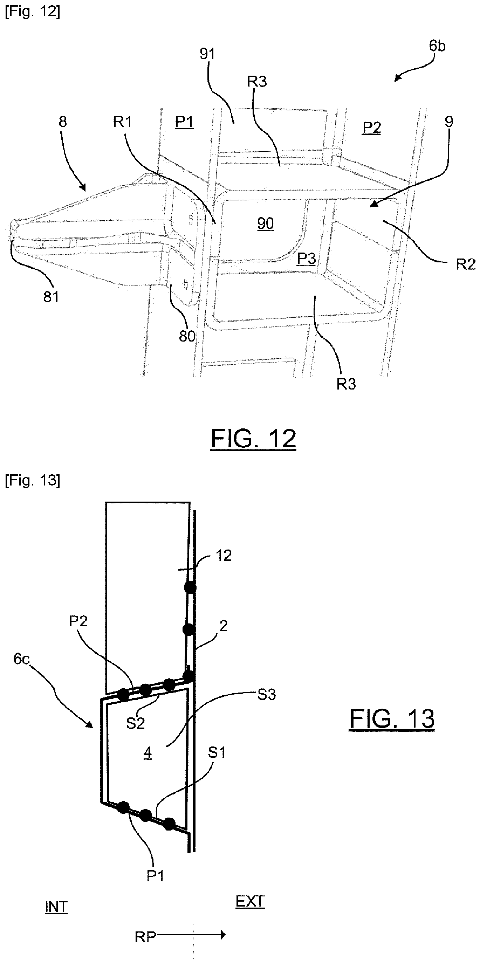

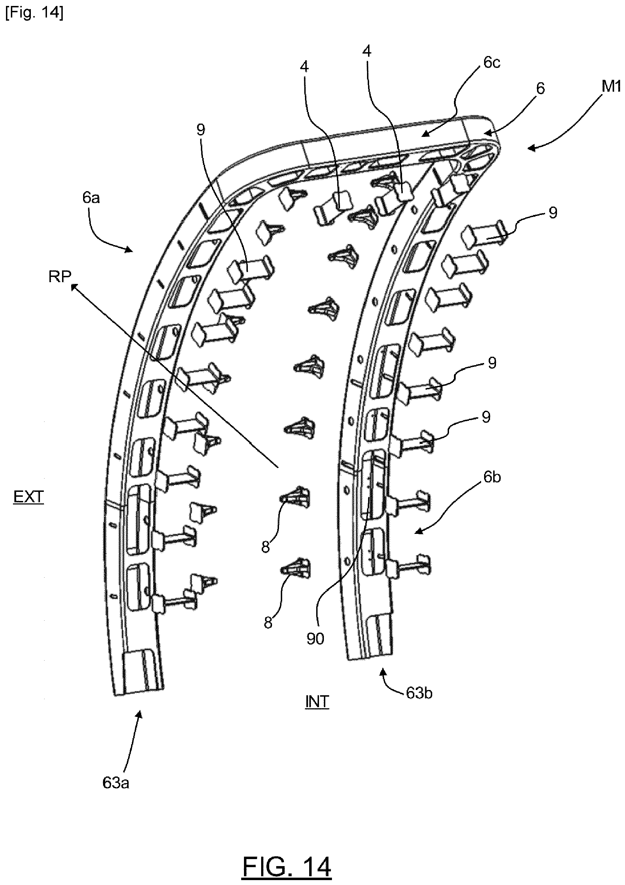

Comme illustré aux figures 13 et 14, l'encadrement 5 comporte en outre des organes de raccord 4 montés dans la cavité intérieure de la partie supérieure 6c du corps principal 6, c'est-à-dire, dans la partie formant le linteau. Les organes de raccord 4 sont positionnés en regard des raidisseurs transversaux 12, appelés « cadres », situés au-dessus de l'encadrement 5 de manière à assurer une transmission optimale des efforts entre l'encadrement 5 et les raidisseurs transversaux 12.

Chaque organe de raccord 4 comprend une paroi inférieure S1 en contact avec la paroi intérieure P1, une paroi supérieure S2 en contact avec la paroi extérieure P2 et une paroi latérale S3 reliant la paroi inférieure S1 à la paroi supérieure S2. La paroi inférieure S1 est reliée à la paroi intérieure P1 tandis que la paroi supérieure S2 est reliée à la paroi extérieure P2. Les raidisseurs transversaux 12 sont reliés à la paroi supérieure S2 via la paroi extérieure P2 de manière à assurer une reprise optimale des efforts entre l'encadrement de porte 5 et les raidisseurs transversaux 12 et permettre une transmission des efforts entre la partie supérieure 6c et les raidisseurs transversaux 12 situés au-dessus de l'encadrement 5.

En référence à la figure 12, les parties latérales 6a, 6b et la partie supérieure 6c du corps principal monobloc 6 comportent des ouvertures traversantes dans une des parois de liaison P3 de manière à permettre un accès pour l'inspection et la maintenance. Selon certaines configurations, des ouvertures de liaison peuvent être présentes dans les parois P1 et/ou P2.

Un exemple de mise en oeuvre d'un procédé de montage d'un module d'encadrement de porte M1 va être dorénavant présenté.

Tout d'abord, les raidisseurs longitudinaux 11 et les raidisseurs transversaux 12 sont fixés sur la face intérieure de la peau 2 comprenant l'ouverture extérieure 20.

De manière préférée, l'encadrement de porte 5 est préassemblé dans un lieu déporté, à distance, du lieu de montage. Le corps principal monobloc 6 est fabriqué d'une seule pièce, en particulier, en matériau composite. Les organes de renfort 9, de butée 8 et de raccord 4 sont de préférence assemblés au corps principal monobloc 6 de manière à former un module d'encadrement M1 déjà préassemblé pouvant être monté directement à l'aéronef A, c'est-à-dire, au lieu de montage.

Selon un aspect particulier, les organes de renfort 9 pourraient être formés avec le corps principal monobloc 6, par exemple, par un procédé co-consolidation, de sur-injection, de soudage ou par rivetage.

Lors du montage, l'encadrement 5 est relié à la peau 2 par liaison de la languette intérieure 61 et de la languette extérieure 62 puis relié aux raidisseurs transversaux 12, notamment, via les organes de raccord 4 et par les fourches 63a, 63b. Cela permet d'obtenir un accostage optimal de l'encadrement 5. Ensuite, le seuil peut être fixé à l'encadrement 5.

Grâce à l'invention, l'assemblage d'un encadrement 5 est pratique et peut être fabriqué en grande partie dans un lieu déporté, ce qui accélère les cadences de montage sur le lieu de montage. L'utilisation d'organes de renfort 9 permet d'améliorer la reprise des efforts des organes de butée 8 qui sont ainsi drainés de manière optimale dans la peau 2, et dans les raidisseurs longitudinaux 11. Du fait de sa structure monobloc, le corps principal monobloc 6 remplit une fonction de caisson de torsion et permet, de manière globale, de capter les différents efforts à laquelle est soumise l'ouverture extérieure 20 et de les diffuser de manière répartie dans le fuselage 1.

Le gain de temps sur le lieu de montage est estimé à au moins 50% par comparaison à un encadrement traditionnel. Le nombre de références pour le montage est par ailleurs réduit de manière importante.

Comme illustré à la figure 15, il a été présenté précédemment un encadrement 5 comprenant un unique module d'encadrement M1 comportant un corps principal monobloc 6 comportant successivement une partie latérale 6a, une partie de coin 6d, une partie supérieure 6c, une partie de coin 6e et une partie latérale 6b. Ainsi, l'encadrement 5 et le module d'encadrement M1 selon l'invention se confondent.

Selon une autre forme de réalisation, en référence à la figure 16, l'encadrement 5 peut comprendre un premier module d'encadrement M2 et un deuxième module d'encadrement M3 qui sont montés de manière rapportée ensemble. Le premier module d'encadrement M2 comporte une partie latérale 6a, une partie de coin 6d et une portion de partie supérieure 6c1. Le deuxième module d'encadrement M3 comporte une partie latérale 6b, une partie de coin 6e et une portion de partie supérieure 6c2. Les deux modules d'encadrement M2, M3 peuvent posséder des formes analogues dans le cadre d'une simple courbure (section courante) ou des formes non-analogues dans le cadre de zone de pointe avant double courbure. Un encadrement 5 en deux parties permet de faciliter la formation des deux modules d'encadrement M2, M3 en ne nécessitant que des équipements de fabrication de taille réduite par comparaison à un encadrement 5 en une seule partie.

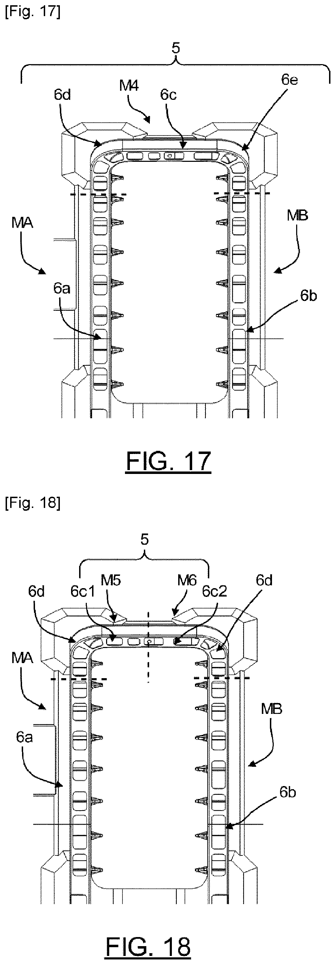

Selon une autre forme de réalisation, en référence à la figure 17, l'encadrement 5 peut comprendre un module d'encadrement M4 comprenant une partie de coin 6d, une partie supérieure 6c et une partie de coin 6e ainsi que deux modules auxiliaires MA, MB. Le premier module auxiliaire MA correspond à la partie latérale 6a et est de préférence monobloc. De manière analogue, le deuxième module auxiliaire MB correspond à la partie latérale 6b et est de préférence monobloc. Selon une variante, en référence, à la figure 18, en lieu et place d'un unique module d'encadrement M4, celui-ci pourrait être réalisé en deux parties pour comporter, d'une part, un premier module d'encadrement M5 comportant une partie de coin 6d et une portion de partie supérieure 6c1 et, d'autre part, un deuxième module d'encadrement M6 comportant une partie de coin 6e et une portion de partie supérieure 6c2 comme illustré à la figure 18.

Un encadrement 5 en plusieurs modules permet de fabriquer lesdits modules avec des équipements moins complexes et onéreux. L'assemblage de l'encadrement 5 demeure néanmoins simple et pratique. Dans toutes les formes de réalisation, l'encadrement 5 comprend au moins un module d'encadrement comportant un corps principal définissant au moins une partie de coin, ce qui permet d'optimiser le transfert des efforts entre la partie supérieure et la partie longitudinale de l'encadrement 5, sans nécessité de prévoir des organes de liaison qui sont complexes à monter, lourds et encombrants.

## Revendications

1. Module d'encadrement (M1-M6) pour un encadrement (5) de porte passager configuré pour être relié à une peau (2) d'un fuselage (1) d'aéronef (A), la peau (2) comportant une ouverture extérieure (20) configurée pour être fermée par une porte passager (P), l'ouverture extérieure (20) ayant une circonférence comportant une partie supérieure, deux parties latérales opposées et deux parties de coin reliant respectivement la partie supérieure aux deux parties latérales, le module d'encadrement (M1-M6) comportant :
- un corps principal monobloc (6) comportant au moins une partie de coin (6d, 6e) configurée pour rigidifier une partie de coin de la circonférence de l'ouverture extérieure (20), la partie de coin (6d, 6e) étant incurvée d'un angle compris entre 70° et 110° de manière à assurer la transition des efforts entre une partie supérieure et une partie latérale de l'encadrement (5),
- le corps principal monobloc (6) comportant une section ouverte définissant une paroi intérieure (P1) définie par rapport à l'ouverture extérieure (20), une paroi extérieure (P2) définie par rapport à l'ouverture extérieure (20) et une paroi de liaison (P3) reliant la paroi intérieure (P1) à la paroi extérieure (P2), la paroi intérieure (P1) comportant une languette intérieure (61) et la paroi extérieure (P2) comportant une languette extérieure (62) configurées pour être fixées à la peau (2) de manière à former un caisson avec une cavité intérieure lors de sa fixation à la peau (2).

2. Module d'encadrement (M1-M6) selon la revendication 1, dans lequel le corps principal monobloc (6) comporte au moins une partie latérale (6a, 6b) configurée pour rigidifier une partie latérale de la circonférence de l'ouverture extérieure (20).

3. Module d'encadrement (M1-M6) selon la revendication 2, comprenant une pluralité d'organes de butée (8) configurée pour entrer en contact avec la porte passager (P), les organes de butée étant fixés à la partie latérale (6a, 6b) du corps principal monobloc (6).

4. Module d'encadrement (M1-M6) selon la revendication 3, dans lequel les organes de butée (8) sont fixés à la paroi intérieure (P1) de la partie latérale (6a, 6b) dudit corps principal (6).

5. Module d'encadrement (M1-M6) selon l'une des revendications 3 à 4, comprenant une pluralité d'organes de renfort (9) logés dans la cavité intérieure du corps principal monobloc (6) et reliés audit corps principal monobloc (6), un organe de renfort (9) étant positionné en regard de chaque organe de butée (8) pour reprendre ses efforts.

6. Module d'encadrement (M1-M6) selon la revendication 5, dans lequel chaque organe de renfort (9) est fixé à l'organe de butée (8) avec lequel il est positionné en regard.

7. Module d'encadrement (M1-M6) selon l'une des revendications 5 à 6, dans lequel chaque organe de renfort (9) possède une forme de ceinture qui est reliée à la paroi intérieure (P1) et à la paroi extérieure (P2).

8. Module d'encadrement (M1-M6) selon la revendication 7, dans lequel chaque organe de renfort (9) comporte des languettes (91) fixées à la paroi de liaison (P3) du corps principal monobloc (6).

9. Module d'encadrement (M1-M6) selon l'une des revendications 1 à 8, dans lequel le corps principal monobloc (6) comporte au moins une partie supérieure (6c) configurée pour rigidifier une partie supérieure de la circonférence de l'ouverture extérieure (20).

10. Module d'encadrement (M1-M6) selon l'une des revendications 1 à 9, dans lequel le corps principal monobloc (6) comporte au moins deux parties de coin (6d, 6e) configurées pour rigidifier deux parties de coin de la circonférence de l'ouverture extérieure (20), chaque partie de coin (6d, 6e) étant incurvée d'un angle compris entre 70° et 110° de manière à assurer la transition des efforts entre une partie supérieure et une partie latérale de l'encadrement (5).

11. Encadrement (5) de porte passager configuré pour être relié à une peau (2) d'un fuselage (1) d'aéronef (A), la peau (2) comportant une ouverture extérieure (20) configurée pour être fermée par une porte passager (P), l'ouverture extérieure (20) ayant une circonférence comportant une partie supérieure, deux parties latérales opposées et deux parties de coin reliant respectivement la partie supérieure aux deux parties latérales, l'encadrement (5) comportant au moins un module d'encadrement (M1-M6) selon l'une des revendications 1 à 10.

12. Encadrement (5) selon la revendication 11, comportant au moins un module auxiliaire (MA, MB) comportant au moins une partie latérale configurée pour rigidifier une partie latérale de la circonférence de l'ouverture extérieure (20), le module auxiliaire (MA, MB) étant relié à au moins un module d'encadrement (M1-M6).

13. Ensemble comprenant une peau (2) d'un fuselage (1) d'aéronef (A), la peau (2) comportant une ouverture extérieure (20) configurée pour être fermée par une porte passager (P), et un module d'encadrement (M1-M6) de porte passager (5), selon l'une des revendications 1 à 10, dont la languette intérieure (61) et la languette extérieure (62) sont reliées à la peau (2) de manière à former un caisson avec une cavité intérieure.

14. Procédé de montage d'un module d'encadrement (M1-M6) selon l'une des revendications 1 à 10 sur une peau (2) d'un fuselage (1) d'aéronef (A), la peau (2) comportant une ouverture extérieure (20) configurée pour être fermée par une porte passager (P) et des raidisseurs transversaux (12), le procédé comportant des étapes consistant à :
- Relier la languette intérieure (61) et la languette extérieure (62) à la peau (2) puis
- Relier le module d'encadrement (M1-M6) aux raidisseurs transversaux (12).
